# EUROPEAN PATENT APPLICATION

(11) **EP 4 737 373 A1**
(43) Date of publication of application: **06.05.2026**
(21) Application number: 25210856.8
(22) Date of filing: 23.10.2025
(51) Int. Cl.: B66B 5/00, B66B 5/02

(54) **DISTRIBUTED PEOPLE MOVER SYSTEM CONFIGURED TO PROVIDE SOLUTIONS TO TECHNICAL OPERATIONAL ISSUES USING AUGMENTED REALITY AND ACCUMULATED DATA**

(30) Priority: 30.10.2024 IN 202411083274
(71) Applicant: Otis Elevator Company, Farmington, Connecticut 06032 (US)
(72) Inventor: Vushakola, Ranjit Kumar, 500081 Telangana (IN); Ladi, Srinivasarao, 500081 Telangana (IN)
(74) Representative: Schmitt-Nilson Schraud Waibel Wohlfrom Patentanwälte Partnerschaft mbB

(57) **Abstract**

A system configured for resolving a technical anomaly condition in a people mover system, the system having: a sensor configured generate sensor data indicative of an operational parameter associated with the people mover system; and a system controller module configured to receive over a first communication channel, state data indicative of the operational parameter obtained from the sensor data, apply the state data, as input to a generative Al model and identify an anomaly condition in the people mover system, wherein the system controller module is configured to transmit instructional data to a mobile device over a second communication channel, wherein the instructional data contains one or more of: written instructions identifying where to locate the anomaly; or data to identify the anomaly condition, including one or more of sound data; or image data; or video data; and corrective actions for resolving the anomaly condition.

## Description

The embodiments relate to a distributed people mover system and more specifically to a distributed people mover system that is configured to provide a solution to a technical operational issue using augmented reality and accumulated data.

It may often be a challenge for a technician to address (e.g., resolve) technical operational issues in the field. A technician, after attempting to identify a location of a technical problem and applying corrective measures, may be required to repeatedly ride an elevator to determine if the location and corrective measures were correctly identified and successfully implemented. This can cause delays and lead to assessment errors, resulting in additional downtime for the affected devices.

A system configured for resolving a technical anomaly condition in a people mover system, the system comprising: a sensor configured generate sensor data indicative of an operational parameter associated with the people mover system; and a system controller module configured to receive over a first communication channel, state data indicative of the operational parameter obtained from the sensor data, apply the state data, as input to a generative AI model and identify an anomaly condition in the people mover system, wherein the system controller module is configured to transmit instructional data to a mobile device over a second communication channel, wherein the instructional data contains one or more of: written instructions identifying where to locate the anomaly; or data to identify the anomaly condition, including one or more of sound data; or image data; or video data; and corrective actions for resolving the anomaly condition.

Particular embodiments further may include at least one, or a plurality of, the following optional features, alone or in combination with each other:

In addition to one or more aspects of the system or as an alternate, the system controller module is configured to transmit alert data to the mobile device upon identifying the anomaly condition that is separate from transmitting the instructional data.

In addition to one or more aspects of the system or as an alternate, the instructional data further identifies a location of the anomaly condition.

In addition to one or more aspects of the system or as an alternate, the people mover system includes a people mover that is an escalator, an elevator or a moving platform and the state data is indicative of an operational state of the people mover.

In addition to one or more aspects of the system or as an alternate, the people mover is the elevator, the people mover system includes an elevator machine, and the state data is indicative of an operational state of the elevator machine.

In addition to one or more aspects of the system or as an alternate, the system controller module is configured to transition the people mover system into a service mode and instruct the people mover to move to the location of the anomaly condition, to thereby transport a technician to the location of the anomaly condition to service the people mover system.

In addition to one or more aspects of the system or as an alternate, the mobile device is a mobile phone or a peripheral device configured for processing multi-modal data, including one or more of text, sound, image and video, in the instructional data, for communicating the instructional data by the mobile device as augmented reality to a technician.

In addition to one or more aspects of the system or as an alternate, controller module repeatedly receives and processes the state data, generates updates to the instructional data and transmits the instructional data as updated to the mobile device while the people mover system is in the service mode and until the controller module determines that the state data indicates the operational parameter of the people mover system is within a predetermined normal operating range.

In addition to one or more aspects of the system or as an alternate, the generative AI model is trained on data including one or more of commissioning data, heartbeat data, code version update data and maintenance data.

In addition to one or more aspects of the system or as an alternate, the sensor includes one or more of a speed sensor, a vibration sensor, a load sensor, a door operation sensor and a health sensor, wherein the health sensor is configured to sense a mechanical failure in the people mover system; and the first communication channel is a wired or wireless channel and the second communication channel is a wireless channel that is the same as or different form the first communication channel.

Disclosed is a method of resolving a technical anomaly in a people mover system, comprising: receiving, by a system controller module over first communication channel, state data indicative of an operational parameter associated with the people mover system, that was obtained by a sensor configured to sense the operational parameter; applying, by the system controller module, the state data as input to a generative AI model, to identify an anomaly condition in the people mover system; and transmitting, by the system controller module to a mobile device, over a second communication channel, instructional data to the mobile device, containing one or more of sound, image and video data, to identify the anomaly condition and corrective actions for resolving the anomaly condition.

Particular embodiments further may include at least one, or a plurality of, the following optional features, alone or in combination with each other:

In addition to one or more aspects of the method or as an alternate, the method includes transmitting, by the system controller module, alert data to the mobile device upon identifying the anomaly condition, wherein the transmitting of the alert data is separate from the transmitting of the instructional data.

In addition to one or more aspects of the method or as an alternate, the instructional data further identifies a location of the anomaly condition.

In addition to one or more aspects of the method or as an alternate, the people mover system includes a people mover that is an escalator, an elevator or a moving platform, and the state data is indicative of an operational state of the people mover.

In addition to one or more aspects of the method or as an alternate, the people mover is the elevator, the people mover system includes an elevator machine, and the state data is further indicative of an operational state of the elevator machine.

In addition to one or more aspects of the method or as an alternate, the method includes transitioning, by the system controller module, the people mover system into a service mode and instructing the people mover to move to the location of the anomaly condition to thereby transport the technical to the location of the anomaly condition to service the people mover system.

In addition to one or more aspects of the method or as an alternate, the mobile device is a mobile phone, or a peripheral device, configured for processing multi-modal data, including one or more of text, sound, image and video, in the instructional data, for communicating the instructional data by the mobile device to a technician as augmented reality.

In addition to one or more aspects of the method or as an alternate, the method includes repeatedly receiving and processing, by controller module, the state data, generating updates to the instructional data and transmitting the instructional data as updated to the mobile device while the people mover system is in the service mode and until the controller module determines that the state data indicates the operational parameter of the people mover system is within a predetermined normal operating range.

In addition to one or more aspects of the method or as an alternate, the generative AI model is trained on data including one or more of commissioning data, heartbeat data, code version update data and maintenance data.

In addition to one or more aspects of the method or as an alternate, the sensor includes one or more of a speed sensor, a vibration sensor, a load sensor, a door operation sensor and a health sensor, wherein the health sensor is configured to sense a mechanical failure in the people mover system; and the first communication channel is a wired or wireless channel, and the second communication channel is a wireless channel that is the same as or different form the first communication channel.

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 shows a distributed system according to the embodiments that is configured to address technical issues related to the operation of a people mover system with the use of augmented reality and accumulated data;
FIG. 3 is a schematic of the process executed by the distributed system to address technical issues related to the operation of a people mover system with the use of augmented reality and accumulated data; and
FIGS. 4 is a flowchart of a method of addressing technical issues related to the operation of a people mover system with the use augmented reality and accumulated data and accumulated data.

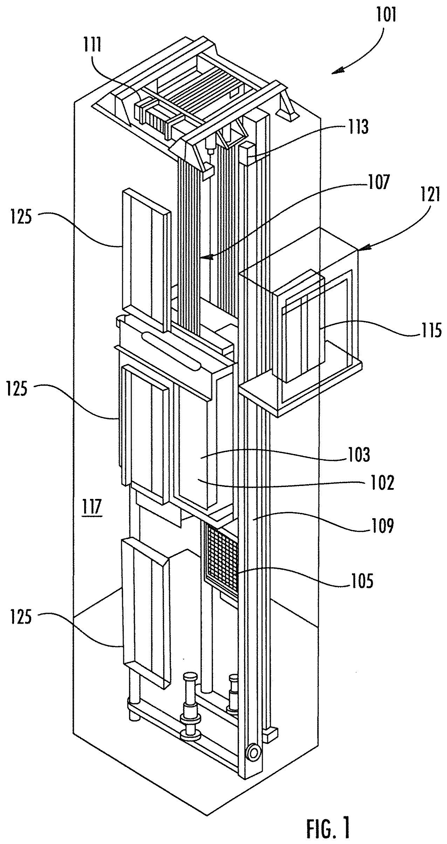

FIG. 1 is a perspective view of an elevator system 101 including a people mover 102 which may be an elevator car 103, a counterweight 105, a tension member 107, a guide rail (or rail system) 109, a machine (or machine system) 111, a position reference system 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the hoistway or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

In other embodiments, the system comprises a conveyance system that moves passengers between floors and/or along a single floor. Such conveyance systems may include escalators, moving walkways, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator system and/or moving walkway and a conveyance apparatus of the conveyance system such as a moving stair of the escalator system and/or moving walkway.

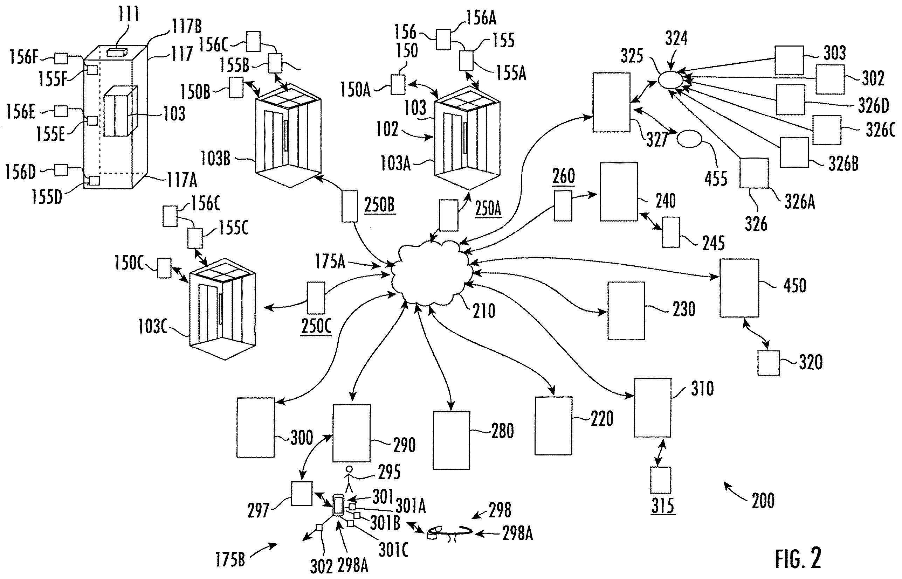

Turning to FIG. 2, disclosed is a distributed (e.g., cloud) system 200. While various modules are illustrated for performing discrete functions in FIG. 2, it is to be appreciated that two or more of the functions may be combined into a common module or alternatively the functions may be further divided into additional modules.

The system 200 includes a network 210 which may be a wide area network such as the internet. People movers 102 are shown as elevator cars103A-103C (generally 103), though the people movers 102 may be escalators, moving platforms or walkways or the like, as nonlimiting embodiments. That is, while the disclosure may reference elevator cars 103, this is a nonlimiting example of a people mover 102 to which the disclosure is applicable.

The elevator cars 103 may be IoT (internet of things) devices, i.e., devices operationally coupled over the internet over a first communication channel (e.g., network) 175A. The first communication channel 175 may utilize a wired channel, such as ethernet, or a wireless channel, e.g., a wide area network or a cellular network, discussed in greater detail below. Each of the elevator cars 103 may have a device controller 150A-150C (generally 150) and a sensor 155A-155C (generally 155) configured to transmit sensor data 156A-156C (generally 156). The sensor 155 may include one or more of a speed sensor, a vibration sensor, a microphone, a pressure sensor, a load sensor, a door operation sensor and a health sensor, e.g., that is configured to sense a mechanical failure of the elevator cars 103.

Additional ones of the sensors 155D-155F (generally grouped with sensors 155) may be located in the hoistway 117, distributed between the pit (bottom) 117A of the hoistway 117 and the top 117B of the hoistway, i.e., where the machine 111 may be located. Sensor data 156D-156F (generally grouped with sensors data 156) transmitted by the sensors 155 in the hoistway 117, e.g., along with the rest of the sensor data 156, may include video, audio, vibration, and other sensed information. The information may be related to operational parameters of an elevator car 103 traveling near or around the sensor 155 and any other machinery, e.g., machine 111, associated with the hoistway 117 and operation of the elevator car 103.

The system 200 may have a controller module (or service) 220, an IoT central module 230 or similar platform, and an IoT application and data storage module 240 (for simplicity an application module or an IoT app module 240). The IoT central module 230 is a known IoT application platform as a service (aPaaS) with user-engageable dashboards that centralizes device data, allows for data-driven workflows, and the creation of custom apps. The IoT central module 230 may integrate various components such as sensors, processors, memory, and communication interfaces. These modules play a role in enabling devices to connect and communicate with each other in an Internet of Things (IoT) ecosystem. IoT app module 240 is utilized for storage and other processes running in a cloud service.

The telemetry messages (data) 250 may come from the elevator cars 103 (e.g., in a raw format or as processed data, as nonlimiting examples) and are extracted, transformed into a readable/storable format and loaded onto databases for the front-end applications to consume and publish. The controller module 220 may instruct the IoT central module 230 to register the elevator cars 103with the IoT app module 240 to enable the IoT app module 240 to receive telemetry data 250A-250C (generally 250), which include the sensor data 156, from the elevator cars 103 and to transmit code 260, such as updates, to the elevator cars 103. The elevator cars 103 may also interact in other ways with each other and the cloud, e.g., to request updates, voice communications, etc.

There may be hundreds of thousands of the elevator cars 103, each sending production (e.g., actual) telemetry data 250 to the IoT app module 240. Each message may relate to different aspects of the elevator cars 103, such as the operational condition of the breaks, doors, etc., throughout the day.

The IoT app module 240 may generate logs 245, periodically, such as daily, indicative of received telemetry data 250 and transmitted code 260. A monitor and capture metrics module (for simplicity, a monitoring module) 280 may monitor the logs generated by the IoT app module 240. The logs 245 may be forwarded to a metrics storage module 310 where telemetry metrics data 315 is derived from the logs 245. A query module 450 may generate reports 320 from the telemetry metrics data 315, which may be viewable via an interactive performance dashboard 297, accessible via a web interface module 290, e.g., on a mobile phone 298A, or other portable smart device 298 as smart glasses 298B, as a nonlimiting embodiment. Reference herein to a mobile phone 298A shall be deemed to include other smart devices 298. With this configuration, errors or alert conditions recorded in the communications can be identified by a user 295 who may be a technician. The user may engage an API module (or gateway) 300 to engage the controller module 220. The mobile phone 298A may communicate over a second communication channel 175B which may be a cellular network or a wide area network. In one embodiment, the first and second channels 175A, 175B may be utilize the same protocols and, in one embodiment, may be a common channel.

It is to be appreciated that the mobile phone 298A may have onboard sensors 301, including a microphone 301A, video input 301B and other sensor 301C such as a motion sensor. Mobile device data 302 captured by the mobile phone 298A may be transmitted over the second communication channel 175B for processing by the system 200 along with the telemetry data 250. Further, the technician 295 may enter user input data 303 representing conditions they detect on the elevator cars 103 or in the operational environment of the elevator cars 103. such as along the hoistway 117. This information may be entered in the interactive performance dashboard 297 for the system 200 to utilize along with the telemetry data 250.

More specifically, the figure shows the user 295 that engages the web interface module 290 to communicate with the controller module 220 via the API module 300 and to view the performance dashboard 297, e.g., on their mobile phone 298. The IoT central module 230 registers the elevator cars 103with the IoT app module 240. The registration establishes trust in device connectivity and allows messages to traverse between devices and the cloud in both directions, i.e., device to cloud and cloud to device, according to predefined load scenarios. The monitoring module 280 may monitor telemetry logs 245 generated by the IoT app module 240. The query module 450 generates telemetry metrics data 315 and reports 320 from the telemetry metrics data 315, which may be stored on the metrics storage module 310 and visualized on a performance dashboard 297 over the web interface module 290 to identify errors logged over the past day (as an example) at the IoT app module 240.

According to the embodiments, a machine learning model (MLM) 325 (generally referred to as a neural network model or a generative AI model 324), may be within an AI module 327 or in one of the identified modules the reports 320. The MLM 325 may be engaged by the user 295, utilizing natural language, when requesting a report, e.g., seeking a solution to a technical operational issue related to operation of the elevator cars 103. In response, the MLM 325 may provide recommendations on remedying issues identified in the telemetry logs 245, e.g., based on accumulated data utilized to train the MLM 325.

As can be appreciated, the MLM 325, may be in a learning mode (training mode), where it is trained on datasets, such as obtained from the sensor data 156 or other data identified below. In this mode, the MLM 325 learns patterns and relationships within the data to make accurate predictions or decisions. In this mode, the parameters of the MLM 325 are adjusted based on the input data and the desired output. In a production mode (inference mode), once the MLM 325 is trained and validated, and is deployed, the MLM 325 uses the learned parameters to make predictions on new, unseen data, and provides real-time or batch predictions to end-users or other systems.

Sources of information for the learning mode of the MLM 325 may include data 326, including device maintenance data 326A, e.g., obtained from mechanics engaging apps on their phones 298 that transmit relevant data to the controller module 220. The maintenance data 326A may identify technical issues, successful and unsuccessful solutions to the technical issues. The data may include voice, image and video data, e.g., multi-modal data, that may be segmented utilizing segmentation models executed by encoders and decoders related to step-by-step resolutions of the identified technical issues. The data 326 may include code download (e.g., update) data 326B, e.g. obtained from the IoT app module 240. The data 326 may include heartbeat data 326C from the telemetry data 250 including performance, alarms and event data. The data 326 may also include initial commissioning data 326D, e.g., obtained from the IoT central module 230 when registering the elevator cars 103. The data 326 may further include mobile device data 302 and user input data 303, discussed above.

Similarly, according to the embodiments, the AI module 327, or e.g., the query module 450, may be equipped with a large language model (LLM) 455 as another generative AI model 324. The LLM 455 may be trained using typical techniques, e.g., collecting and processing datasets that are relevant to the operation and maintenance of the elevator cars 103, applying a model architecture such as transformers which can handle long-range dependencies in text, applying hyperparameter tuning to the training data batches to adjust the size and configuration of the training data, applying optimization techniques to improve accuracy, and thereafter iteratively tuning the LLM 455. The LLM 455 may be trained to respond to technicians 295 who submit queries, e.g., to the controller module 220, for reports 320 about the current, historical, and predictable (e.g., statistically) future operational conditions of the system 200, as well as to address active technical maintenance issues. That is, while the MLM 325 may be utilized to identify and address technical operational issues in the system 200 and recommend solutions, the LLM 455 may be utilized to enable a communication exchange with a technician 295 utilizing natural language.

It is to be appreciated that the MLM 325 may be trained to respond to natural language input without the need for a separate LLM 455, e.g., utilizing natural language processing (NLP). NPL is a subfield of machine learning focused on the interaction between computers and human language.

As indicated, while various modules are illustrated for performing discrete functions in FIG. 2, it is to be appreciated that two or more of the functions may be combined into a common module or alternatively the functions may be further divided into additional modules. As such reference to the controller module 220 herein may implicate functions described as applicable to the controller module 220 or other modules.

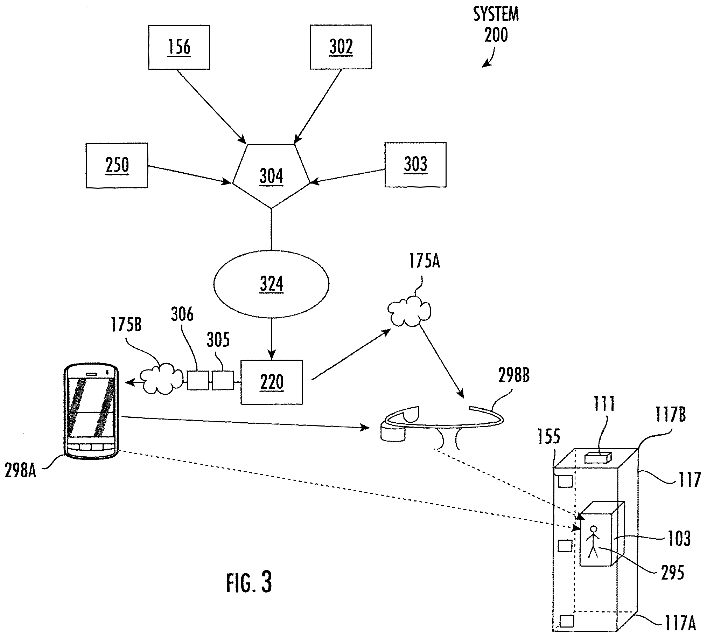

Turning to FIG. 3, according to the embodiments, the trained generative AI model 324 may be able to receive as input in a production mode, the telemetry data 250, the sensor data 156, the mobile device data 302, and the user data 303 (collectively state data 304). From the state data 304, generative AI model 324 may identify technology anomalies (e.g., a technical anomaly condition), such as in the operation of a technical system identified herein that is onboard the elevator car 103 or within the hoistway 117. The system 200, e.g., via the controller module 220, may control the elevator system 101 via communications over network connection 175A to enter a maintenance mode, e.g., to lockout normal use by passengers, and transmit alert data 305 over a second communication channel 175B to the mechanic 295. The alert data 205 may identify the anomaly condition.

The controller module 220 may control the elevator car 103, with the mechanic 295 onboard, to travel in the hoistway 117 to the location of the anomaly. For example, the car 103 may travel to the pit 117A or top of the hoistway 117 near the machine 111, or other location where the mechanic 295 can address the anomaly such as a particular height in the hoistway where the anomaly was detected. Instructional data 306, which may be multi-modal, may be transmitted to the mobile device 298 of the mechanic 295, such as the mobile phone 298A or smart glasses 298B to address the problem, e.g., with sound (e.g., voice), images and video. The instructional data 306 may include multi-modal data representing the anomaly condition, i.e., the appearance and operational state of the elevator system 101, including one or more of the car 103 or associated equipment, e.g., the machine 111, as operating with the anomaly condition. The instructional data 306 may include steps for fixing the anomaly condition, and the appearance and operational state of the elevator system 101 when operating within a predetermined normal operating range. During the period of time that the issue is being addressed, the controller module 220 may continue to receive telemetry data 250 from the sensors 255, device data 302 from the smart devices 298 and user input data 303 from the technician 295. This updated state data 304 may be fed as input to the generative AI model 324 to determine whether an anomaly is still detected, whether the anomaly is the same or different anomaly. This cycle may continue until the generative AI model 324 determines that no anomaly is detected, e.g., elevator system 101 is operating within an acceptable operational range.

That is the disclosed system 200 collects real time feed, e.g., of state data, through sensors 155 to detect the ride quality and other technical issues and anomalies, e.g., operations outside of an acceptable threshold or range. The system 200 will render insights related to detecting and resolving the technical issue, and the resolutions are portrayed on an augmented reality apparatus 298, which may represent the real time elevator system 101 along with the AI recommendation, e.g., illustrating components and faults. The mechanic 295 utilize the data to act up on and address the ride quality and other mechanical issues. This system 200 helps the mechanic 295 have a real time feel of the elevator system 101 and more efficiently address ride quality and other technical issues. Based on the insights, the system 200 will instruct the elevator car 103 to take the mechanic 295 directly to a location of an anomaly and use augmented reality to show the issue to the mechanic 130 and provide steps for resolving the issue. The cycle may be repeated until updated state data 304 received by the system 200 indicates no further issue is present. It can be appreciated that the system 200 provides for an optimized method for addressing technical issues in an elevator system 101. The system 200 enables the saving of time and effort, and provides more accurate and reliable solutions to the technicians 295.

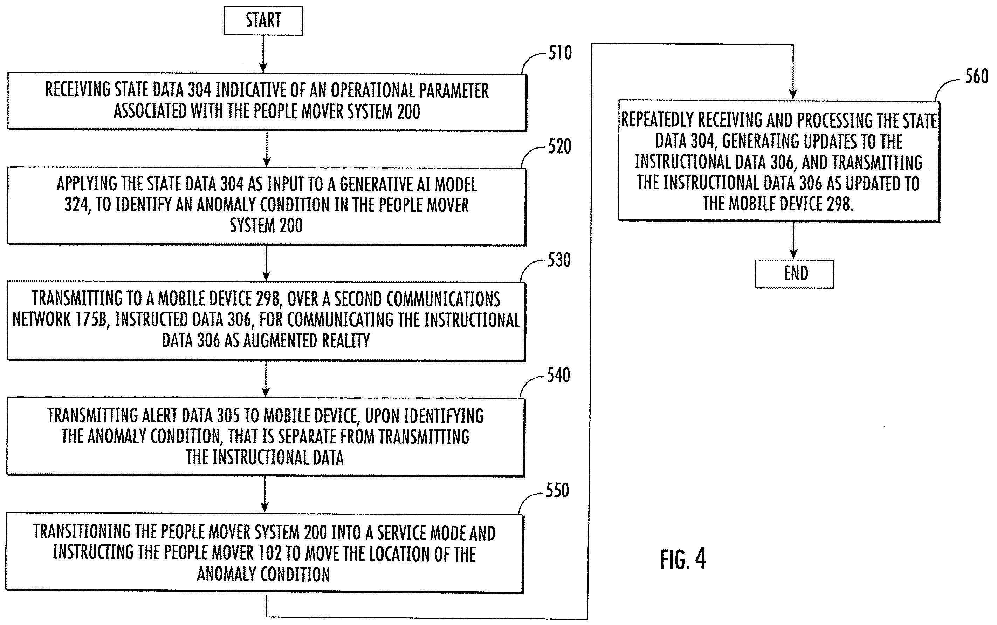

Turning to FIG. 4, a flowchart shows a method of addressing technical issues related to the operation of a people mover system 200 (for simplicity, the system 200) with the use augmented reality and accumulated data. Boxes in dashed lines in the flowchart, if any, represent further explanations of one or more preceding steps and are not intended on limiting the scope of the embodiments.

As shown in block 510 the method includes receiving, by a system controller module 220 over first communications network 175A, state data 304. The state data 304 is indicative of an operational parameter associated with the system 200 that was obtained, e.g., by a sensor 155 configured to sense the operational parameter. That is, the state data 304 may be indicative of an operational state of the people mover 102.

As indicated, the system 200 includes a people mover 102 that is an escalator, an elevator 103 or a moving platform. As also indicated, the people mover 102 is the elevator 103, the system 200 includes an elevator machine 111, and the state data 304 is indicative of an operational state of the elevator machine 111. As indicated, the sensor 155 includes one or more of a speed sensor, a vibration sensor, a load sensor, a door operation sensor and a health sensor. The health sensor is configured to sense a mechanical failure in the system 200.

As shown in block 520 the method includes applying, by the system controller module 220, the state data 304 as input to a generative AI model 324. With this input data, the model 324 identifies an anomaly condition in the system 200. As indicated, the generative AI model is trained on data 326 including one or more of commissioning data 326D, heartbeat data 326C, code version update data 326B, maintenance data 326A.

As shown in block 530 the method includes transmitting, by the system controller module 220 to a mobile device 298, over a second communication channel (e.g., network) 175B, instructional data 306. The instructional data 306 contains written instructions identifying where to locate the anomaly. In addition, or as an alternative, the instructional data 306 includes data to identify the anomaly condition, including one or more of sound data, or image data, or video data. In addition, or as an alternative, the instructional data 306 includes corrective actions for resolving the anomaly condition. As also indicated, the first communication channel 175A is a wired or wireless channel and the second communication channel 175B is a wireless channel that is the same as or different form the first communication channel 175A. As indicated, the mobile device 298 is a mobile phone 298A or a peripheral device 298B configured for processing multi-modal data, including one or more of text, sound (e.g., voice), image and video, in the instructional data 306. This enables communicating the instructional data 306, by mobile device 298, to the technician 295, as augmented reality.

As shown in block 540 the method includes transmitting, by the system controller module 220, alert data 305 to the mobile device 298, upon identifying the anomaly condition. The alert data transmission may be separate from transmitting the instructional data 306. For example, an alert message may be transmitted over a network with a higher priority than other messages. As indicated, the instructional data 306 further identifies a location of the anomaly condition.

As shown in block 550 the method includes transitioning, by the system controller module 220, the system 200 into a service mode and instructing the people mover 102 to move to the location of the anomaly condition. This set of steps transports the technician 295 to the location of the anomaly condition to service the system 200.

As shown in block 560 the method includes repeatedly receiving and processing, by controller module 220, the state data 304, generating updates to the instructional data 306, and transmitting the instructional data 306 as updated to the mobile device 298. This cycle continues while the system 200 is in the service mode, until the controller module 220 determines that the state data 304 indicates the operational parameter of the system 200 is within a predetermined normal operating range.

Regarding the implementation of artificial intelligence (AI) identified herein, expressly or inherently, a machine learning model, e.g., part of an artificial intelligence (AI) system, may be utilized in the embodiments. An AI system simulates human intelligence using a digital computer or a machine controlled by a digital computer, senses the environment, e.g., using available sensors including speed, acceleration, vibration, sound, video and the like, and acquires knowledge and uses the knowledge to obtain the optimum results. The AI infrastructure includes technologies such as the sensors, dedicated artificial intelligence chips, cloud computing, distributed storage, big data processing technologies, operation/interaction systems, mechatronics, and the like. Some implementations of AI according to the embodiments utilize computer vision technology, a voice processing technology, a natural language processing technology, machine learning/deep learning and the like.

Some implementations of AI according to the embodiments utilize pre-trained (PT) machine translation models that adopt a sequence-to-sequence (sequence-sequence or S-S) framework based on a neural network. The S-S framework is a framework including an encoder-decoder structure. The encode-decoder structure converts an input sequence into another sequence output. In this framework, the encoder converts the input sequence into vectors, and the decoder accepts the vectors and generates the output sequence in time order. The encoder and the decoder may utilize the same type of neural network model, or may utilize different types of neural network models. The neural network model may be a CNN (Convolutional Neural network) model, an RNN (redundant Neural network) model, a long-short-term memory (LSTM) model, a delay network model, a gated CNN model, or the like.

The trained machine learning models, once trained, can analyze the input data, and in one or more aspects, predict and/or characterize features included in the sensed data. In the case of video, in one non-limiting example, the sensed data can include sequential images and/or encoded video data (e.g., using digital video file/stream formats and/or codecs, such as MP4, MOV, AVI, WEBM, AVCHD, OGG, and/or the like including combinations and/or multiples thereof). The prediction and/or characterization of the features can include segmenting the video data. In some instances, the one or more trained machine learning models include or are associated with a preprocessing or augmentation (e.g., intensity normalization, resizing, cropping, and/or the like including combinations and/or multiples thereof) that is performed prior to segmenting the video data. An output of the one or more trained machine learning models can include a prediction of aspects of the video data, a location and/or position of the aspects within the video data, and/or state of the aspects. The location can be a set of coordinates in an image/frame in the video data. The trained machine learning models, in one or more examples, are trained to perform higher-level predictions and tracking.

Similar predictions can be made with regard to the operational state of a device by analyzing sensor data captured while the device is utilized and applying the data to trained machine learning models. For example, utilizing a serviced learning technique, the model is trained on known inputs and outputs from legacy events to predict future outputs from future inputs. The models may be evaluated so that variables may be weighted or re-weighted to more accurately correlate inputs and outputs, and the model may be re-retrained as more inputs and outputs are collected. For example, the prediction of a state of multiple devices of an operationally integrated system of devices may be obtained utilizing a trained model. Data may be captured, including operational sounds, vibrations, etc., for one (or fewer than all) of the devices, and the captured data may be run through a trained model that is trained to identify the influence (constructive and destructive) that the devices have on each other in their respective operational states, including when they are functioning within and outside of acceptable tolerances.

Regarding telecommunication implementations identified herein, expressly or inherently, wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radio-frequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allows microcontrollers and devices to communicate with each other in applications without a host computer. CAN is a message-based protocol released by the International Organization for Standards (ISO). The above is not intended on limiting the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or compiled, and may then be stitched together or maintained as separate packets of information.

Regarding computing technologies identified herein, expressly or inherently, each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A system configured for resolving a technical anomaly condition in a people mover system, the system comprising:
a sensor configured generate sensor data indicative of an operational parameter associated with the people mover system; and
a system controller module configured to receive over a first communication channel, state data indicative of the operational parameter obtained from the sensor data, apply the state data, as input to a generative AI model and identify an anomaly condition in the people mover system,
wherein the system controller module is configured to transmit instructional data to a mobile device over a second communication channel, wherein the instructional data contains:
one or more of:
written instructions identifying where to locate the anomaly; or
data to identify the anomaly condition, including one or more of sound data; image data; or video data; and
corrective actions for resolving the anomaly condition.

2. The system of claim 1, wherein the system controller module is configured to transmit alert data to the mobile device upon identifying the anomaly condition that is separate from transmitting the instructional data.

3. The system of claim 1 or 2, wherein the instructional data further identifies a location of the anomaly condition.

4. The system of claim 3, wherein the people mover system includes a people mover that is an escalator, an elevator or a moving platform and the state data is indicative of an operational state of the people mover.

5. The system of claim 4, wherein the people mover is the elevator, the people mover system includes an elevator machine, and the state data is indicative of an operational state of the elevator machine.

6. The system of claim 4 or 5, wherein the system controller module is configured to transition the people mover system into a service mode and instruct the people mover to move to the location of the anomaly condition, to thereby transport a technician to the location of the anomaly condition to service the people mover system.

7. The system of any of claims 4 to 6, wherein the mobile device is a mobile phone or a peripheral device configured for processing multi-modal data, including one or more of text, sound, image and video, in the instructional data, for communicating the instructional data by the mobile device as augmented reality to a technician.

8. The system of claim 6, wherein controller module repeatedly receives and processes the state data, generates updates to the instructional data and transmits the instructional data as updated to the mobile device while the people mover system is in the service mode and until the controller module determines that the state data indicates the operational parameter of the people mover system is within a predetermined normal operating range.

9. The system of any of claims 1 to 8, wherein:
the generative AI model is trained on data including one or more of commissioning data, heartbeat data, code version update data and maintenance data.

10. The system of any of claims 1 to 9, wherein:
the sensor includes one or more of a speed sensor, a vibration sensor, a load sensor, a door operation sensor and a health sensor, wherein the health sensor is configured to sense a mechanical failure in the people mover system; and
the first communication channel is a wired or wireless channel and the second communication channel is a wireless channel that is the same as or different form the first communication channel.

11. A method of resolving a technical anomaly in a people mover system, comprising:
receiving, by a system controller module over first communication channel, state data indicative of an operational parameter associated with the people mover system, that was obtained by a sensor configured to sense the operational parameter;
applying, by the system controller module, the state data as input to a generative AI model, to identify an anomaly condition in the people mover system; and
transmitting, by the system controller module to a mobile device, over a second communication channel, instructional data to the mobile device, containing:
one or more of:
written instructions identifying where to locate the anomaly; or
data to identify the anomaly condition, including one or more of sound data; or image data; or video data; and
corrective actions for resolving the anomaly condition.

12. The method of claim 11, comprising transmitting, by the system controller module, alert data to the mobile device upon identifying the anomaly condition, wherein the transmitting of the alert data is separate from the transmitting of the instructional data; and/or
wherein the instructional data further identifies a location of the anomaly condition.

13. The method of claim 11 or 12, wherein the people mover system includes a people mover that is an escalator, an elevator or a moving platform, and the state data is indicative of an operational state of the people mover; and/or
wherein the people mover is the elevator, the people mover system includes an elevator machine, and the state data is further indicative of an operational state of the elevator machine.

14. The method of any of claims 11 to 13, comprising transitioning, by the system controller module, the people mover system into a service mode and instructing the people mover to move to the location of the anomaly condition to thereby transport the technical to the location of the anomaly condition to service the people mover system; and/or
wherein the mobile device is a mobile phone, or a peripheral device, configured for processing multi-modal data, including one or more of text, sound, image and video, in the instructional data, for communicating the instructional data by the mobile device to a technician as augmented reality.

15. The method of any of claims 11 to 14, comprising repeatedly receiving and processing, by controller module, the state data, generating updates to the instructional data and transmitting the instructional data as updated to the mobile device while the people mover system is in the service mode and until the controller module determines that the state data indicates the operational parameter of the people mover system is within a predetermined normal operating range; and/or
wherein the generative AI model is trained on data including one or more of commissioning data, heartbeat data, code version update data and maintenance data; and/or
wherein:
the sensor includes one or more of a speed sensor, a vibration sensor, a load sensor, a door operation sensor and a health sensor, wherein the health sensor is configured to sense a mechanical failure in the people mover system; and
the first communication channel is a wired or wireless channel, and the second communication channel is a wireless channel that is the same as or different form the first communication channel.
